**Europäisches Patentamt**

**European Patent Office**

**Office européen des brevets**

(19)

(11) Veröffentlichungsnummer: **0 085 855**
**B1**

(12) **EUROPÄISCHE PATENTSCHRIFT**

(45) Veröffentlichungstag der Patentschrift:
**08.04.87**

(21) Anmeldenummer: **83100421.3**

(22) Anmeldetag: **19.01.83**

(51) Int. Cl.⁴: **G 11 B 5/31**

(54) Dünnschicht-Mehrspur-Magnetkopf hoher Spurdichte.

(30) Priorität: **06.02.82 DE 3204184**

(43) Veröffentlichungstag der Anmeldung:
**17.08.83 Patentblatt 83/33**

(45) Bekanntmachung des Hinweises auf die Patenterteilung:
**08.04.87 Patentblatt 87/15**

(84) Benannte Vertragsstaaten:
**DE FR GB NL**

(56) Entgegenhaltungen:
**EP-A-0 012 913**
**DE-B-2 522 861**
**FR-A-2 450 495**

**Patent Abstracts of Japan, Band 1, Nr. 138, 12.**
**November 1977, Seite 6711E77 & JP-A-52-75421**

(73) Patentinhaber: **ROBERT BOSCH GMBH, Postfach**
**50, D-7000 Stuttgart 1 (DE)**

(72) Erfinder: **Hurst, Kurt, Taunusstrasse 21, D-7000**
**Stuttgart 30 (DE)**
Erfinder: **Neuffer, Kurt, Dr. Dipl.- Ing., Ob.**
**Bauernwaldstrasse 39, D-7000 Stuttgart 1 (DE)**
Erfinder: **Reinhart, Karl- Franz, Dr., Fritz- Reuter-**
**Strasse 21, D-7000 Stuttgart 1 (DE)**

## Beschreibung

## Stand der Technik

Die Erfindung geht aus von einem Dünnschicht-Mehrspur-Magnetkopf nach der Gattung des Hauptanspruches. Ein derartiger Magnetkopf ist beispielsweise bekannt aus der FR-PS 24 50 495, wo ein magnetischer Übertragungskopf beschrieben ist zur Erzeugung einer Aufzeichnung auf einem magnetischen Aufzeichnungsmedium, welches entlang dem Kopf bewegt wird. Der Kopf ist auf einem Substrat aufgebracht, welches eine größere Anzahl magnetischer Übertragungselemente vom Dünnschichttyp trägt. Die Magnetisierung wird erzeugt durch eine Windung einer streifenförmigen elektrischen Leitung, wobei ein Anschlußleiter und ein Teil der anderen Ansclußleiter in den selben Ebenen fliegen und seitlich an die eine Windung herangeführt sind. Die in Dünnschichttechnologie hergestellten Leiterbahnen weisen nur eine geringe (einige $\mu$m) Schichtdicke auf. Die zur bestimmungsgemäßen Funktion des Magnetkopfes erforderliche Mindeststromstärke erfordert dann eine bestimmte Mindestbreite der Leiterbahnen, damit die Stromdichte einen maximal zulässigen Wert nicht überschreitet. Durch die erforderliche Leiterbahnbreite ergibt sich eine relativ große Gesamtbreite des Magnetkopfes, was der Erzeugung einer hohen Spurdichte, bzw. bei vorgegebener Aufzeichnungsbreite einer hohen Spurzahl entgegensteht.

## Vorteile der Erfindung

Der erfindungsgemäße Dünnschicht-Mehrspur-Magnetkopf mit den kennzeichnenden Merkmalen des Hauptanspruchs hat demgegenüber den Vorteil, daß eine wesentlich höhere Spurdichte erreicht wird als dies mit bekannten Dünnschichtgestaltungen möglich war. Die Anschlußleiterbahnen sind auf der zweiten, oberen Magnetschicht des magnetischen Joches angeordnet und seitlich des Joches mit der hindurchgeführten Leiterbahn kontaktiert. Der vorgeschlagene Magnetkopf eignet sich vorzüglich zur digitalen Ton-, Video- oder Datenaufzeichnung.

Durch die in Unteransprüchen aufgeführten Maßnahmen sind vorteilhafte Weiterbildungen und Verbesserungen des im Hauptanspruch angegebenen Magnetkopfes möglich. Besonders vorteilhaft ist in fertigungstechnischer Hinsicht eine Anordnung, bei der beide auf der oberen Magnetschicht angeordneten Anschlußleiterbahnen nebeneinander mit Abstand parallel verlaufen. Durch diese Anordnung erreicht man zusätzlich zur Platzersparnis auch noch geringere Leiterbahnwiderstände wegen der größeren Leiterbahnbreite als dies bei gegebener Spurdichte mit seitlich am Magnetjoch entlang geführten Leiterbahnen möglich ist. Hierdurch werden die u.a. bei Mehrspurköpfen mit der Erwärmung durch ohmsche Verluste verbundenen Probleme gemindert.

Anstelle der Anordnung mit nebeneinanderliegenden Leiterbahnen ist es jedoch auch möglich, die Leiterbahnen übereinander auf der oberen Magnetschicht anzuordnen. Hierdurch kann der elektrische Widerstand der Zuleitungen weiter verringert werden, jedoch ist ein höherer fertigungstechnischer Aufwand erforderlich. Weiterhin ist es möglich, die Anschlußleiterbahnen nicht auf der oberen Magnetschicht sondern unter der unteren Magnetschicht anzuordnen. Diese Gestaltung kann im Einzelfall vorteilhaft sein, um die Verlustwärme der Zuleitungen rascher abzufüren, jedoch dürfte es normalerweise zweckmäßiger sein, die untere Magnetschicht unmittelbar auf die glatte Substratoberfläche aufzubringen, weil hierdurch die magnetischen Eigenscbaften besser werden. Insbesondere kommt es an Kanten, die eine Magnetschicht bedecken muß, vermehrt zur Domänenbildung und zu Streuflußaustritten, wodurch wiederum der Wirkungsgrad des Kopfes verschlechtert wird. Rauheiten einer Unterlage, z.B. einer darunterliegenden Schicht, verschlechtern grundsätzlich die magnetischen Eigenschaften einer Magnetschicht.

## Zeichnung

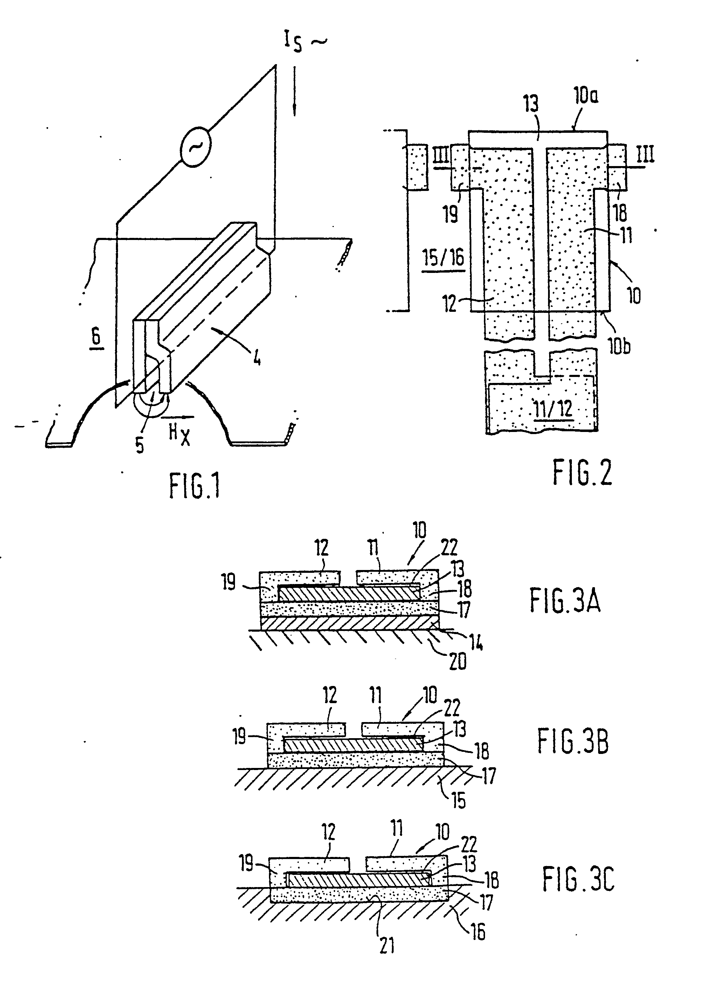

Drei Ausführungsbeispiele der Erfindung sind in der Zeichnung schematisch dargestellt und in der nachfolgenden Beschreibung näher erläutert. Es zeigen Figur 1 ein Prinzipschaltbild der induktiven Aufzeichnung auf ein Magnetband, Figur 2 das Prinzip des Aufbaus eines Dünnschicht-Mehrspur-Magnetkopfes mit zwei auf der oberen Magnetschicht nebeneinanderliegenden Anschlußleiterbahnen und Figur 3a bis c drei Gestaltungsvarianten entsprechend dem Schnitt III-III in Figur 2.

## Beschreibung der Ausführungsbeispiele

In Figur 1 ist mit 4 ein Magnetjoch in Dünnschichttechnik bezeichnet, an dessen Aufzeichnungsspalt 5 ein Magnetfeld Hx vom Joch auf ein Magnetband 6 übertritt. Die Größe der magnetischen Feldstärke Hx wird bestimmt durch einen Signalstrom $I_S$, der in einer einzigen Windung das Magnetjoch 4 durchsetzt.

In Figur 2 ist mit 10 ein Element eines vorzugsweise zum Aufzeichnen geeigneten Dünnschicht-Mehrspur-Magnetkopfes bezeichnet. Die Draufsicht gemäß Figur 2 zeigt zwei Anschlußleiterbahnen 11, 12 auf der zweiten, in der Darstellung oberen Magnetschicht 13, welche zusammen mit einer aus Figur 3 ersichtlichen ersten, unteren Magnetschicht 14, 15 oder 16 ein magnetisches Joch 4 des Magnetkopfes bildet. Im Bereich der Vorderkante 100 des Elementes 10 bilden die beiden Magnetschichten den magnetisch wirksamen Spalt 15 zum Aufzeichnen auf einem magnetischen Aufzeichnungsmedium 6, im spaltfernen Bereich 10b liegen die Magnetschichten unmittelbar aufeinander. Die Anschlußleiterbahnen 11 und 12 verlaufen im Bereich der oberen Magnetschicht im Abstand nebeinander, außerhalb des magnetischen Joches liegen sie elektrisch gegeneinande; isoliert übereinander und nehmen die gesamte zur Verfügung stehende Breite ein, so daß der elektrische Widerstand der Zuleitungen weiter herabgesetzt wird. Die Anschlußleiterbahnen 11, 12 verlaufen also im wesentlichen im Bereich des magnetischen Joches 4 und benötigen daher in Längsrichtung des Spaltes 5 keinen zusätzlichen Platz, weshalb die Spurdichte gegenüber bekannten Anordnungen wesentlich erhöht werden kann. Lediglich im Bereich der innen zwischen den beiden Magnetschichten hindurchgeführten Leiterbahn 17 ist seitlich etwas Platz erforderlich für Kontaktierungsstege 18 und 19, welche die innen hindurchgeführte Leiterbahn 17 mit den Anschlußleiterbahnen 11 und 12 verbinden.

Figur 3 zeigt verschiedene Schnitte entlang der Linie III-III in Figur 2 für unterschiedliche Gestaltungen. Im Figur 3a ist die Magnetkopfanordnung auf einem elektrisch isolierendem Substrat 20 aufgebaut. Auf das Substrat ist zunächst die untere Magnetschicht 14, hierauf die innere Leiterbahn 17 und die obere Magnetschicht 13 und hierauf wiederum elektrisch isoliert die Anschlußleiterbahnen 11 und 12 aufgebracht. Die Breite der unteren Magnetschicht 14 entspricht mindestens der Breite der oberen Magnetschicht 13 zuzüglich der Breite der beiden seitlichen Kontaktierungsstege 18 und 19; dies gilt auch für die Anordnungen entsprechend der Figuren 2b und 2c.

Die Anordnung gemäß Figur 3b ist derart aufgebaut, daß als Substrat ein ferromagnetisches Material verwendet ist, welches selbst die untere Magnetschicht 15 bildet. Hierauf liegt unter Einfügung einer elektrischen Isolation, wiederum die innere Leiterbahn 17 mit den Kontaktierungsstegen 16 und 19 an den seitlichen Rändern und dem hiermit verbundenen Anschlußleiterbahnen 11 und 12, welche elektrisch isoliert auf der oberen Magnetschicht 13 angeordnet sind.

Figur 3c entspricht grundsätzlich der Anordnung gemäß Figur 3b mit einem ferritischen Material als Substrat, wobei das magnetische Substrat wiederum die untere Magnetschicht 16 bildet. Das Substrat besitzt eine Aussparung 21 zur Aufnahme der durch das Joch aus den Magnetschichten 13 und 16 hindurchgeführten Leiterbahn 17.

Zwischen den Anschlußleiterbahnen 11, 12 und der oberen Magnetschicht 13 liegt eine Isolation aus z.B. einer Polyamid-Lackschicht 22. Die Isolation zwischen der oberen Magnetschicht und der inneren Leiterbahn 13, bzw. zwischen dieser und der unteren Magnetschicht 14, 15 oder 16 besteht zweckmäßigerweise aus einem keramischen Material (SiO, $Al_2O_3$), welches in einem Aufdampfprozeß oder durch Kathodenzerstäubung aufgebracht wird. Auch die innere Leiterbahn 17 zwischen den beiden Magnetschichten des Joches 4 wird in einem Aufdampfprozeß hergestellt. Im Gegensatz hierzu werden die Anschlußleiterbahnen 11 und 12 auf die obere Magnetschicht 13 und außerhalb dieser durch galvanische Abscheidung aufgebracht, vorzugsweise in einer Dicke von ca 5 µm, wobei die Struktur der Anschlußleiterbahnen 11 und 12 durch eine Fotolackmaske vorgegeben wird.

Bei den dargestellten bevorzugten Ausführungsbeispielen werden also die Anschlußleiterbahnen 11 und 12 des Dünnschicht-Magnetkopfes bei jedem einzelnen Element unmittelbar seitlich neben der oberen Magnetschicht 13 hochgeführt. Die Rückführung der Anschlußleiterbahnen 11 und 12 erfolgt auf der oberen Magnetschicht 13, wobei zumindest außerhalb des eigentlichen Magnetkopfes die Leiterbahnen 11 und 12 zur Erzielung größerer Leiterbahnbreiten aufeinanderliegen und durch eine elektrisch isolierende Schicht getrennt sind. Die untere Magnetschicht 14, 15 oder 16 des Dünnschicht-Magnetkopfes ist mindestens so breit, daß das Leiterbahnstück 17, das zwischen oberer und unterer Magnetschicbt hindurchführt, keine Strukturkante überwinden muß. Die untere Magnetschicht kann dabei sowohl eine auf einem Isolierstoffsubstrat aufgebrachte Magnetschicht sein wie auch Teil eines magnetischen Substrates, der Aufbau der Anschlußleiterbahnen erfolgt jeweils in gleicher Art und Weise.

Durch die erfindungsgemäße Anordnung wird eine beachtliche Erhöhung der Spurdichte von Mehrspurmagnetköpfen in Dünnschicht-Technologie ermöglicht, da die seitlich neben der Magnetschicht herausgeführten Leiterbahnen entfallen, wodurch sich eine wesentliche seitliche Platzersparnis ergibt. Wegen der auftretenden hohen Ströme in einem Magnetkopf mit nur einer Windung sind der Verringerung der Leiterbahnenbreiten Grenzen gesetzt, durch die erfindungsgemäße Anordnung können jedoch ohne zusätzlichen Platzbedarf ausreichende Leiterbahnbreiten verwendet werden. Die durch den ohmschen Widerstand der Anschlußleiterbahnen 11 und 12 bedingten Verlustleistungen verursachen daher keine nennenswerte thermische Belastung des Magnetkopfes. Der seitliche Platzbedarf je Element 10 beträgt nur noch ca 5 bis 10 µm beiderseits der Magnetschicht für die Kontaktierungsstege 18 und 19, welche die innere Leiterbahn 17 mit den Anschlußleiterbahnen 11 und 12 verbinden. Auf diese Weise läßt sich beispielsweise bei einer Spurbreite von 90 μm der Platzbedarf pro Kopf auf ca 100 bis 110 μm reduzieren, während bei herkömmlichen Anordnungen mit seitlich geführten Anschlußleiterbahnen bei gleicher Spurbreite und gleicher Leiterbahnbreite hierzu ein Platzbedarf von ca 150 μm erforderlich war. Dies entspricht einer Verringerung der Gesamtbreite um ca ein Drittel, so daß bei sonst gleichen Bedingungen im entsprechenden Maße die Spurdichte erhöht werden kann.

**Patentansprüche**

1. Dünnschicht-Mehrspur-Magnetkopf, insbesondere zur digitalen Ton-, Video- oder Datenaufzeichnung, mit je einer ersten (14) und einer zweiten (13) ein- oder zweilagigen Magnetschicht, welche gemeinsam ein magnetisches Joch (4) bilden, und mit wenigstens einer zwischen den beiden Magnetschichten hindurchgeführten Leiterbahn, welche mit Anschlußleiterbahnen (11, 12) elektrisch verbunden ist, dadurch gekennzeichnet, daß die Anschlußleiterbahnen (11, 12) auf der zweiten, oberen Magnetschicht (13) des magnetischen Joches (4, 13; 14, 15, 16) angeordnet und seitlich des Joches mit der hindurchgeführten Leiterbahn (17) kontaktiert sind.

2. Magnetkopf nach Anspruch 1, dadurch gekennzeichnet, daß die Anschlußleiterbahnen (11, 12) im Abstand nebeneinander auf der zweiten, oberen Magnetschicht (13) angeordnet sind.

3. Magnetkopf nach einem der vorhergebenden Ansprüche, dadurch gekennzeichnet, daß die Anschlußleiterbahnen (11, 12) im Bereich des magnetischen Joches (4, 13; 14, 15, 16) seitlich nebeinander und außerhalb des Joches elektrisch isoliert übereinander angeordnet sind.

4. Magnetkopf nach einem der vorhergehenden Anspruche, dadurch gekennzeichnet, daß die Isolation zwischen der zweiten, oberen Magnetschicht (13) und den Anschlußleiterbahnen (11, 12) aus einer Polyamid-Lackschicht (22) besteht.

5. Magnetkopf nach einem der vorbergehenden Ansprüche, dadurch gekennzeichnet, daß die zwischen den beiden Magnetschichten (13; 14, 15, 16) des Joches hindurchgeführte Leiterbahn (17) auf die erste, untere Magnetschicht (14, 15, 16) aufgedampft ist, vorzugsweise in einer Dicke > 1 μm.

6. Magnetkopf nach einem der vorhergehenden Ansprüche, dadurch gekennzeichnet, daß die Anschlußleiterbahnen (11, 12) auf die zweite, obere Magnetschicht (13) und außerhalb dieser durch galvanische Abscheidung aufgebracht sind, vorzugsweise in einer Dicke zwischen 2 μm und 10 μm, wobei die Struktur der Anschlußleiterbahnen (11, 12) durch Fotolackmaskierung bestimmt ist.

7. Magnetkopf nach einem der vorhergehenden Ansprüche, dadurch gekennzeichnet, daß die erste, untere Magnetschicht (14) mindestens die Breite der zweiten, oberen Magnetschicht (13) zuzüglich der Breite der seitlichen Kontaktierungsstege (18, 19) zwischen der innen hindurchgeführten Leiterbahn (17) und den Anschlußleiterbahnen (11, 12) besitzt.

8. Magnetkopf nach einem der vorhergehenden Ansprüche, dadurch gekennzeichnet, daß die erste, untere Magnetschicht (14, 15, 16) auf ein ebenes Substrat (20) aus elektrisch isolierendem Material aufgebracht ist.

9. Magnetkopf nach einem der Ansprüche 1 bis 7, dadurch gekennzeichnet, daß die erste, untere Magnetschicht (14, 15, 16) von einem ferromagnetischen Substrat (16, 17) gebildet ist, insbesondere von einem ferritischem Substrat.

10. Magnetkopf nach Anspruch 9, dadurch gekennzeichnet, daß das magnetische Substrat (17) eine Aussparung (21) besitzt zur Aufnahme der durch das Joch (13, 14) hindurchgeführten Leiterbahn (17).

**Claims**

1. Thin-film multitrack magnetic head, in particular for digital sound, video or data recording, each with a first (14) and a second (13) one-layered or two-layered magnetic film, which jointly form a magnetic yoke (4), and with at least one conducting path led through between the two magnetic films, which conducting path is electrically connected to terminal conducting paths (11, 12), characterized in that the terminal conducting paths (11, 12) are arranged on the second, upper magnetic film (13) of the magnetic yoke (4, 13; 14, 15, 16) and are contacted at the sides of the yoke with the led-through conducting path (17).

2. Magnetic head according to Claim 1, characterized in that the terminal conducting paths (11, 12) are arranged spaced apart next to each other on the second, upper magnetic film (13).

3. Magnetic head according to one of the preceding claims, characterized in that the terminal conducting paths (11, 12) are arranged alongside each other in the region of the magnetic yoke (4, 13; 14, 15, 16) and electrically insulated one above the other outside the yoke.

4. Magnetic head according to one of the preceding claims, characterized in that the insulation between the second, upper magnetic layer (13) and the terminal connecting paths (11, 12) consists of a polyimide resist film (22).

5. Magnetic head according to one of the preceding claims, characterized in that the conducting path (17) led-through between the two magnetic films (13; 14, 15, 16) of the yoke is vapour-deposited onto the first, lower magnetic film (14, 15, 16), preferably at a thickness of > 1 μm.

6. Magnetic head according to one of the preceding claims, characterized in that the terminal conducting paths (11, 12) are applied by electro-deposition to the second, upper magnetic film (13) and outside it, preferably at a thickness of between 2 μm and 10 μm, the structure of the terminal conducting paths (11, 12) being determined by photoresist masking.

7. Magnetic head according to one of the preceding claims, characterized in that the first, lower magnetic film (14) has at least the width of the second, upper magnetic film (13) plus the width of the lateral contacting lugs (18, 19) between the inner led-through conducting path (17) and the terminal conducting paths (11, 12).

8. Magnetic head according to one of the preceding claims, characterized in that the first, lower magnetic film (14, 15, 16) is applied to an even substrate (20) of electrically insulating material.

9. Magnetic head according to one of Claims 1 to 7, characterized in that the first, lower magnetic film (14, 15, 16) is formed by a ferromagnetic substrate (16, 17), in particular by a ferritic substrate.

10. Magnetic head according to Claim 9, characterized in that the magnetic substrate (17) has a recess (21) for receiving the conducting path (17) led path through the yoke (13, 14).

**Revendications**

1. Tête magnétique multipiste en couche mince, en particulier pour enregistrement numérique sonore, vidéo ou enregistrement de données, comportant une première couche magnétique (14) et une seconde couche magnétique (13) à simple face ou à double face, qui forment ensemble une culasse magnétique (4), et comportant au moins un ruban conducteur qui passe entre les deux couches magnétiques et qui est électriquement relié à des rubans conducteurs de raccordement (11, 12), caractérisée en ce que les rubans conducteurs de raccordement (11, 12) sont disposés sur la seconde couche magnétique (13), la couche supérieure, de la culasse magnétique (4, 13; 14, 15, 16) et sont mis en contact, sur le côté de la culasse, avec le ruban conducteur qui y passe (17).

2. Tête magnétique selon la revendication 1, caractérisée en ce que les rubans conducteurs de raccordement (11, 12) sont disposés à une certaine distance l'un de l'autre sur la seconde couche magnétique (13), la couche supérieure.

3. Tête magnétique selon l'une des revendications précédentes, caractérisée en ce que les rubans conducteurs de raccordement (11, 12) sont disposés, dans la zone de la culasse magnétique (4, 13; 14, 15, 16), latéralement l'un à côté de l'autre et, en dehors de la culasse, l'un au-dessus de l'autre, électriquement isolés.

4. Tête magnétique selon l'une des revendications précédentes, caractérisée en ce que l'isolation entre la seconde couche magnétique (13), la couche supérieure, et les rubans conducteurs de raccordement (11, 12) est constituée d'une couche de laque polyimide (22).

5. Tête magnétique selon l'une des revendications précédentes, caractérisée en ce que le ruban conducteur (17) qui passe entre les deux couches magnétiques (13; 14, 15, 16) de la culasse est déposé par métallisation sous vide sur la première couche magnétique, la couche inférieure (14, 15, 16), de préférence sous une épaisseur supérieure à 1 micron.

6. Tête magnétique selon l'une des revendications précédentes, caractérisée en ce que les rubans conducteurs de raccordement (11, 12) sont rapportés sur la seconde couche magnétique, la couche supérieure, (13), et à l'extérieur de celle-ci par dépôt galvanique, de préférence sous une épaisseur comprise entre 2 et 10 microns, la structure du ruban conducteur de raccordement (11, 12) étant déterminée par un masque photo-sensible.

7. Tête magnétique selon l'une des revendications précédentes, caractérisée en ce que la première couche magnétique, la couche inférieure (14) possède au moins la largeur de la seconde couche magnétique, la couche supérieure, (13) augmentée de la largeur des barrettes latérales de mise en contact (18, 19) entre le ruban conducteur qui passe à l'intérieur (17) et le ruban conducteur de raccordement (11, 12).

8. Tête magnétique selon l'une des revendications précédentes, caractérisée en ce que la première couche magnétique, la couche inférieure, (14, 15, 16) est rapportée sur un substrat plan (20) en matériau électriquement isolant.

9. Tête magnétique selon l'une des revendications 1 à 7, caractérisée en ce que la première couche magnétique, la couche inférieure, (14, 15, 16) est formée d'un substrat ferromagnétique (16, 17), en particulier d'un substrat ferritique.

10. Tête magnétique selon la revendication 9, caractérisée en ce que le substrat magnétique (17) présente un évidement (21) pour recevoir le ruban conducteur (17) qui passe à travers la culasse (13, 14).

FIG.1

FIG.2

FIG.3A

FIG.3B

FIG.3C